# EUROPÄISCHE PATENTANMELDUNG

(11) **EP 4 421 196 A1**
(43) Veröffentlichungstag der Anmeldung: **28.08.2024**
(21) Anmeldenummer: 23158707.2
(22) Anmeldetag: 27.02.2023
(51) Int. Cl.: C22C 19/03, B28D 1/00, C22C 1/05, C22C 1/10, C22C 29/06, C22C 29/08, B25D 17/00

(54) **HAMMERBOHRER MIT NICKEL-EISEN-BINDER**

(71) Anmelder: Hilti Aktiengesellschaft, 9494 Schaan (LI)
(72) Erfinder: Tarrago, Jose Maria, 88131 Lindau (DE); Moseley, Steven, 6820 Nenzing-Gurtis (AT); Lengauer, Walter, 2100 Leobendorf (AT); Fürst, Markus, 1020 Wien (AT); Beltz de Arancibia, Christa, 66119 Saarbrücken (DE)
(74) Vertreter: Hilti Aktiengesellschaft Corporate Intellectual Property

(57) **Zusammenfassung**

Die Erfindung betrifft einen Hammerbohrer (10), beispielsweise zum Bohren von Gestein wie beispielsweise Beton, umfassend ein Einsteckende (16), einen Schaftabschnitt (12) und einen Bohrkopf (18), wobei der Bohrkopf (18) ein Material (M1, M2) aus einem Härtevermittler und einem Binder aufweist. Er ist dadurch gekennzeichnet, dass der Anteil des Binders am Material (M1, M2) wenigstens 5 und höchstens 13 Gew.-% beträgt, wobei der Binder Ni und Fe aufweist, wobei der Binder wenigstens 10 Gew.-% und höchstens 30 Gew.-% Fe und wenigstens 70 Gew.-% Ni enthält. Der Hammerbohrer (10) kann dadurch eine besonders lange Nutzungsdauer erreichen.

## Beschreibung

Die Erfindung geht aus von einem Hammerbohrer, umfassend ein Einsteckende, einen Schaftabschnitt und einen Bohrkopf, wobei der Bohrkopf ein Material aus einem Härtevermittler und einem Binder aufweist. Solche Hammerbohrer werden unter anderem zum Hammerbohren von Bohrlöchern von Gestein wie beispielsweise Beton verwendet. Hammerbohren kann einem Bohren durch periodisches Schlagen, vorzugsweise mit hohen Schlagenergien, beispielsweise von wenigstens 1 J pro Schlag, entsprechen.

Um den Belastungen des Hammerbohrens aufgrund der periodischen Schläge Stand halten zu können, ist der Bohrkopf aus einem Material aus dem Härtevermittler und einem Binder gefertigt.

Ein bislang häufig verwendetes Material für den Bohrkopf umfasst Wolframkarbid als Härtevermittler und einen Kobalt-haltigen Binder.

Unter anderem aufgrund von mit Kobalt verbundenen Umwelt- und Gesundheitsrisiken sollte auf Kobalt in Zukunft verzichtet werden.

Wenn Anker, beispielsweise Schraubanker, in gebohrte Bohrlöcher gesetzt werden sollen, sind an die gebohrten Bohrlöcher häufig hohe Genauigkeitsanforderungen zu stellen. Beispielsweise sollten Bohrlochdurchmesser mit Toleranzen im Bereich eines Millimeters oder weniger gefertigt sein. Daher können sich Hammerbohrarbeiten von anderen schlagenden Bearbeitungsarten von Gestein, beispielsweise Meißelarbeiten, bei denen derartige Genauigkeitsanforderungen in der Regel nicht erforderlich sind, unterscheiden.

Bereits geringer Abrieb entlang des Umfangs des Bohrkopfes kann seinen Umfang verkleinern und dadurch bereits unbrauchbar machen, selbst wenn seine Schlagkanten noch intakt sein sollten.

Aufgabe der vorliegenden Erfindung ist es daher, einen Kobalt-freien oder zumindest Kobaltreduzierten Hammerbohrer mit langer Nutzungsdauer bereitzustellen.

Gelöst wird die Aufgabe durch einen Hammerbohrer, beispielsweise zum Bohren von Gestein wie beispielsweise Beton, umfassend ein Einsteckende, einen Schaftabschnitt und einen Bohrkopf, wobei der Bohrkopf ein Material aus einem Härtevermittler und einem Binder aufweist, wobei der Anteil des Binders am Material wenigstens 5 Gewichtsprozent, im Folgenden als Gew.-% abgekürzt, und höchstens 13 Gew.-% beträgt, wobei der Binder Ni und Fe aufweist, wobei der Binder wenigstens 10 Gew.-% und höchstens 30 Gew.-% Fe und wenigstens 70 Gew.-% Ni enthält.

Der Erfindung liegt dabei der Gedanke zugrunde, den Kobalt-Anteil im Binder des Materials durch eine möglichst verschleißfeste, alternative Legierung zu ersetzen. Langjährige Untersuchungen der Anmelderin haben dabei ergeben, dass bestimmte Nickel-EisenLegierungen diese Anforderungen besonders gut erfüllen können. Insbesondere können Nickel-Eisen-Legierungen diese Anforderungen zu einem höheren Grad erfüllen als beispielsweise reines Nickel. Insbesondere lässt sich eine bis zu mehr als vierfach erhöhte Verschleißfestigkeit im Vergleich zu reinem Nickel erzielen.

Die Untersuchungen haben weiter gezeigt, dass sich bei Fe-Gehalten von über 30 Gew.-% das Zweiphasen-Kohlenstoff-Fenster für das Sintern ohne Ausscheidung zusätzlicher Phasen erheblich verengt, was eine zuverlässige industrielle Produktion erschwert oder gar unmöglich macht. Bei Fe-Gehalten unter 5 Gew.-% ergibt sich kein oder nur ein kaum merkbarer Nutzen des Legierens mit Fe.

Es kann somit auf Kobalt im Binder des Materials verzichtet werden, wobei dennoch eine hohe Verschleißfestigkeit und damit eine hohe Nutzungsdauer des dieses Material enthaltenden Hammerbohrers gewährleistet werden kann.

Der Binder kann seine Bindewirkung insbesondere mit Wolframkarbid und / oder Wolframborid als Härtevermittler bereitstellen, sodass das Material diese Stoffe vorteilhafterweise umfassen kann. Wolframkarbid kann WC und / oder einer anderen Verbindung aus Wolfram und Kohlenstoff, insbesondere in anderen stöchiometrischen Verhältnissen, umfassen.

Wolframborid kann WB und / oder eine oder mehrere, andere Verbindungen aus Wolfram und Bor, insbesondere in anderen stöchiometrischen Verhältnissen, beispielsweise WB₂, WB₃, WB₄ und / oder WB₅, umfassen.

Ni und Fe können einen wesentlichen Gesamtanteil am Binder bilden. Insbesondere können Ni und Fe insgesamt wenigstens 85 Gew.-%, insbesondere wenigstens 94 Gew.-%, des Binders bilden.

In geringen Mengen, beispielsweise zu höchstens 15 Gew.-%, insbesondere zu höchstens 6 Gew.-%, beispielsweise zu höchstens 1 Gew.-%, können noch weitere Legierungsbestandteile im Binder enthalten sein.

Insbesondere kann der Binder dazu wenigstens ein Element aus der Gruppe, umfassend Ti, V, Cr, Mn, Zr, Nb, Mo, Hf, Ta, W, Re, Ru, Al, Cu, B, N und C, aufweisen.

Für die Anwendung des Materials bei Hammerbohrern empfiehlt es sich, wenn der Härtegrad des Materials eine Vickers-Härte von wenigstens 1250 HV30 aufweist. Besonders bevorzugt beträgt die Vickers-Härte höchstens 1500 HV30.

Auch sind Zähigkeiten von wenigstens 9 MPa*m^{1/2}, insbesondere von wenigstens 11 MPa*m^{1/2}, für diesen Anwendungsbereich besonders bevorzugt.

Eine Härte von unter 1250 HV30 kann zu hohem Abrieb führen, sodass die hohen Genauigkeitsanforderungen nicht mehr hinreichend erfüllt werden können. Eine Härte von über 1500 HV30 kann mit einem unzulässigen Absinken der Zähigkeit einhergehen. Eine erhöhte Bruchgefahr kann sich ergeben. Durch ein Steigern des Gehaltes von Fe im Binder kann sich die Härte erhöhen. Ein Steigern des Gehaltes an Ni im Binder kann die Zähigkeit erhöhen.

Der Bohrkopf kann wenigstens eine Schneide aufweisen. Die Schneide kann wenigstens eine Schlagkante und / oder eine Schlagspitze aufweisen. Die Schneide kann wenigstens eine Schneidenschulter aufweisen. Die Schlagkante und / oder die Schlagspitze können auf der Schneidenschulter sitzen und / oder auf der Schneidenschulter ausgebildet sein. Der Bohrkopf kann aus unterschiedlichen Stoffen ausgebildet sein. Insbesondere kann die Schneidenschulter das Material aufweisen. Das Material kann sich insbesondere bis zu einer seitlichen Außenfläche, insbesondere einer Umfangsfläche, des Bohrkopfs erstrecken. Somit kann ein Abrieb des Bohrkopfs entlang dessen Umfangsflächen aufgrund der vorteilhaften Verschleißfestigkeit des Materials vermindert und damit seine Nutzungsdauer verbessert sein.

Der Binder kann AI in geringen Mengen, beispielsweise von wenigstens 0,1 Gew.-% und / oder von höchstens 10 Gew.-%, enthalten, um die Verschleißfestigkeit weiter zu verbessern. Besonders vorteilhafte Ergebnisse zeigten sich bei Bindern mit Gehalten im Bereich von 3 Gew.-% bis 5 Gew.-% Al, insbesondere 4 Gew.-% Al.

Die Untersuchungen haben gezeigt, dass bei einem besonders vorteilhaften Material der Binder zwischen 6 Gew.-% und 11 Gew.-%, insbesondere 7 Gew.-% oder 9 Gew.-%, des Materials umfassen kann. Fe kann einen Anteil von wenigstens 23 Gew.-% und höchstens 27 Gew.-% des Binders ausmachen. Fe und Ni können insgesamt einen Anteil von wenigstens 98 Gew.-% des Binders ausmachen. Beispielsweise kann es sich bei dem Binder um eine Zusammensetzung von 75 Gew.-% Ni und 25 Gew.-% Fe, im Folgenden auch als 75Ni25Fe bezeichnet, handeln.

Allgemein kann im Folgenden unter aAaBcC... ein Stoff verstanden werden, der a Gew.-% von A, b Gew.-% von B, c Gew.-% von C, usw., abgesehen von Verunreinigungen im Rahmen üblicher Reinheitsgrade wie beispielsweise von wenigstens 99%, 99,9% oder 99,99%, enthält.

Wenigstens ein Teil des Bohrkopfs kann durch ein pulvermetallurgisches Verfahren hergestellt sein. Der Teil, insbesondere der gesamte Bohrkopf, kann beispielsweise mittels Sintern eines Grünlings zu einem Braunling hergestellt sein. Der Grünling kann aus unterschiedlichen Stoffen, darunter das Material, aufgebaut sein.

Denkbar ist auch, dass der Binder Stickstoff umfasst. Dazu kann der Grünling in einer Stickstoff-Atmosphäre gesintert worden sein. Alternativ oder ergänzend kann der Braunling in einer Stickstoff-Atmosphäre, beispielsweise N₂ oder NH₃ aufweisend, nachbehandelt sein. Die Stickstoff-Atmosphäre kann eine Hochdruck-Atmosphäre bis 200 bar beim Sintern und 2000 bar beim heiss-isostatisch Pressen sein.

Der Hammerbohrer kann einen Gradienten aufweisen, insbesondere einen von einer Oberfläche nach innen verlaufenden Gradienten.

Besonders vorteilhaft ist es aufgrund seiner besonderen Verschleißfestigkeit, wenn das Material bei einem Hammerbohrer zum Einsatz kommt der wenigstens drei, insbesondere wenigstens fünf, Schneiden aufweist. Bei einem solchen mehrschneidigen Hammerbohrer ist das Risiko einer Beschädigung einer der Schneidenschultern durch Abrieb besonders hoch, da bereits eine Beschädigung einer einzelnen der Schneiden, insbesondere der Schneidenschultern, genügen kann, um den Hammerbohrer unbrauchbar zu machen.

Um eine noch weitergehende Verschleißfestigkeit, insbesondere der Umfangsflächen, zu erreichen, kann wenigstens eine der Schneidenschultern beschichtet sein. Die Beschichtung kann beispielsweise ein Titan-haltiges Beschichtungsmaterial umfassen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: einen Hammerbohrer in einer Seitenansicht,
- Fig. 2: eine Seitenansicht eines Bohrkopfs des Hammerbohrers,
- Fig. 3 bis Fig. 6: elektronenmikroskopische Schnittbilder zweier Materialien sowie zweier Vergleichsmaterialien und
- Fig. 7: Verschleißwerte mehrerer Materialien sowie der zwei Vergleichsmaterialien.

In der nachfolgenden Beschreibung der Figuren werden zur Erleichterung des Verständnisses der Erfindung für gleiche oder sich funktional entsprechende Elemente jeweils die gleichen Bezugszeichen verwendet.

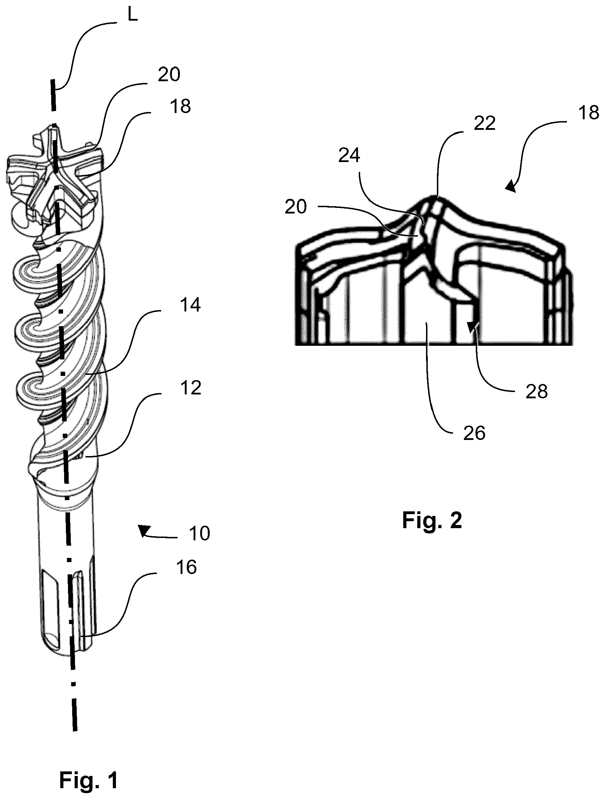

**Fig. 1** zeigt einen Hammerbohrer **10** in einer perspektivischen Schrägansicht. Der Hammerbohrer 10 umfasst einen Schaftabschnitt **12**. Am Schaftabschnitt 12 ist eine Förderwendel **14** ausgebildet.

Einenends des Schaftabschnitts 12 ist ein Einsteckabschnitt **16** zur Verbindung mit einer Werkzeugaufnahme einer Bohrwerkzeugmaschine (in Fig. 1 nicht abgebildet) und anderenends ist ein Bohrkopf **18** zur Bearbeitung eines Untergrundes (in Fig. 1 nicht abgebildet), beispielsweise eines Betons, ausgebildet.

Der Einsteckabschnitt 16 ist z. B. nach Art eines allgemein als "SDS-Max" bekannten Einsteckendes ausgebildet. Denkbar ist auch, dass das Einsteckende 16 nach Art eines sogenannten "SDS Plus"- oder eines ähnlichen standardisierten Einsteckendes ausgebildet ist.

Die Förderwendel 14 ist als zweigängige Wendel ausgebildet. Alternativ ist auch denkbar, die Förderwendel als drei-, vier- oder fünfgängige Wendel auszubilden. Eine zweigängige Wendel kann abgebautes Gestein mit einer hohen Transportleistung vom Bohrkopf 18 weg fördern. Sie kann vergleichsweise robust ausgebildet sein und kann dennoch zu akzeptablen Kosten herstellbar sein. Ihre Wendelstege sind hinreichend weit voneinander entfernt, sodass selbst größere Korngrößen des abgebauten Gesteins ohne zu verklemmen entlang der Förderwendel förderbar sind. Eine als zweigängige Wendel ausgebildete Förderwendel 14 hat sich somit als besonders vorteilhaft erwiesen.

Der Bohrkopf 18 weist fünf Schneiden **20** auf. Aus Gründen der Übersichtlichkeit ist von den fünf Schneiden lediglich eine Schneide 20 mit einem Bezugszeichen markiert.

Die Schneiden 20 verlaufen von einer zentralen Längsachse L des Bohrkopfes 18 nach außen. Es versteht sich, dass der Hammerbohrer 10 schlagend, insbesondere entlang der Längsachse L, betreibbar ist, um das Gestein abzubauen. Insgesamt wird der Hammerbohrer 10 zum Abbau des Gesteins drehschlagend betrieben.

Der Hammerbohrer 10 kann beispielsweise für Bohrlöcher mit einem Durchmesser von mindestens 8 mm und / oder höchstens 32 mm ausgebildet sein.

**Fig. 2** zeigt eine Seitenansicht des Bohrkopfs 18 mit seinen Schneiden 20.

Die Schneiden 20 münden in eine gemeinsame Schlagspitze **22**. Sie weisen jeweils eine Schlagkante **24** auf. Die Schlagkanten 24 sind auf Schneidenschultern **26** ausgebildet. Die Schneidenschultern 26 weisen radial nach außen gerichtete Umfangsflächen **28** auf.

Aus Gründen der Übersichtlichkeit sind in Fig. 2 lediglich eine der Schneiden 20 sowie deren Schlagkante 24, deren Schneidenschulter 26 mit deren, insbesondere seitlichen, Umfangsfläche 28 sowie die Schlagspitze 22 jeweils mit einem Bezugszeichen markiert.

Zum Bohren des Gesteins schlägt der Hammerbohrer 10 (siehe Fig. 1) mit seiner Schlagspitze 22 sowie mit seinen Schlagkanten 24 periodisch auf das Gestein auf.

Unterschiedliche Belastungen wirken beim Hammerbohren auf den Bohrkopf 18. Dementsprechend sollte der Bohrkopf 18 im Bereich der Schneidkanten 24 und der Schneidspitze 22 aus einem möglichst schlagfesten Material ausgebildet sein. Im Bereich der Schneidkanten 24 und / oder im Bereich der Umfangsflächen 28 sollte der Bohrkopf 18 zudem ein möglichst verschleißfestes Material aufweisen.

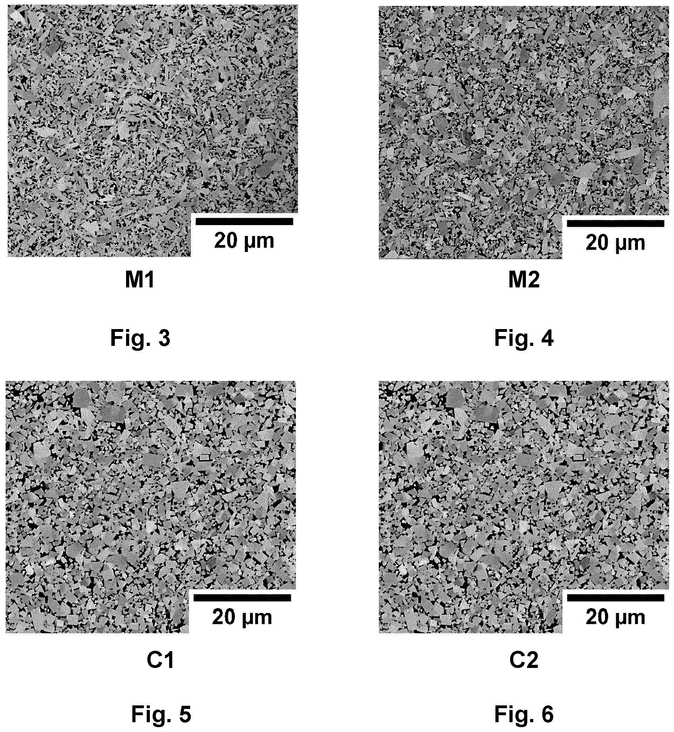

**Fig. 3 bis Fig. 6** zeigen elektronenmikroskopische Schnittbilder zweier Materialien sowie zweier Vergleichsmaterialien.

Alle Materialien und Vergleichsmaterialien sind Mischungen aus WC als Härtevermittler sowie einem Binder. Der Volumenanteil des Binders entspricht jeweils einem 9 Gew.-%-Anteil von Kobalt in WC-Co.

Diese Mischungen wurden gemischt, gemahlen, gepresst und anschließend gesintert.

### Im Einzelnen:

Fig. 3 zeigt ein Schnittbild eines Materials **M1** mit einem Binder aus 75Ni25Fe.
Fig. 4 zeigt ein Schnittbild eines Materials **M2** mit einem Binder aus 81Ni14Fe5Cr.
Fig. 5 zeigt ein Schnittbild eines Vergleichsmaterials **C1** mit einem Binder aus 94Ni6Cr.
Fig. 6 zeigt ein Schnittbild eines Vergleichsmaterials **C2** mit einem Binder aus 100Ni, d. h. Nickel.

Verschleißkoeffizienten, Zähigkeiten und Vickers-Härten in Form von HV50-Werten wurden für die Materialien M1, M2 und für weitere Materialien 85Ni15Fe, im Folgenden **M3**, 90Ni10Fe, im Folgenden **M4**, 72Ni24Fe4Cr, im Folgenden **M5**, 81Ni14Fe5Al, im Folgenden **M6**, sowie für die Vergleichsmaterialien C1, C2 sowie ermittelt.

Die Bestimmung der Verschleißfestigkeiten erfolgte in einer modifizierten Testapparatur auf Basis des nach ASTM B611-13 genormten Testverfahrens:
Ein Stahlrad mit 6 mm Dicke wird mit einer definierten Drehzahl angetrieben, sodass sich eine Umfangsgeschwindigkeit von ca. 1m/s ergibt. Es fördert eine Suspension aus Quarzsand als Abrasivmittel und Wasser in eine Kontaktzone mit einem Prüfkörper mit den Abmessungen 10×25×8 mm³.

Der Prüfkörper wird mit einer definierten Anpresskraft von 50 N an das Stahlrad gepresst.

Das Abrasivmittel besteht aus 1,5 I Wasser und 500 g Quarzsand.

Die Testdauer beträgt 60 min.

Eine Zusammenfassung der ermittelten Ergebnisse findet sich in der nachstehend abgebildeten Tabelle 1:

**Tabelle 1**

| **Bindermaterial** | **Verschleißkoeffizient (mm³/Nm*10⁶)** | **Palmqvist-Zähigkeit (MPa×m^{1/2})** | **Vickers-Härte (HV50)** |
|---|---|---|---|
| M1: 75Ni25Fe | 8,7 ± 2,0 | 11,3±0,4 | 1420±10 |
| M2: 81Ni14Fe5Cr | 12,5 ± 1,4 | 11,0±0,1 | 1380±10 |
| M3: 85Ni15Fe | 37,3±6,4 | 11,4±0,4 | 1330±10 |
| M4: 90Ni10Fe | 37,1±7,3 | 12,8±0,2 | 1270±10 |
| M5: 72Ni24Fe4Cr | 14,3 ± 2,2 | 9,0±0,2 | 1455±10 |
| M6:81Ni14Fe5Al | 25,2±4,4 | 7,5±0,2 | 1465±15 |
| C1: 94Ni6Cr | 31,1 ± 2,7 | 12,9±0,2 | 1340±10 |
| C2: 100Ni | 44,0 ± 6,5 | 15,8±1,4 | 1230±10 |

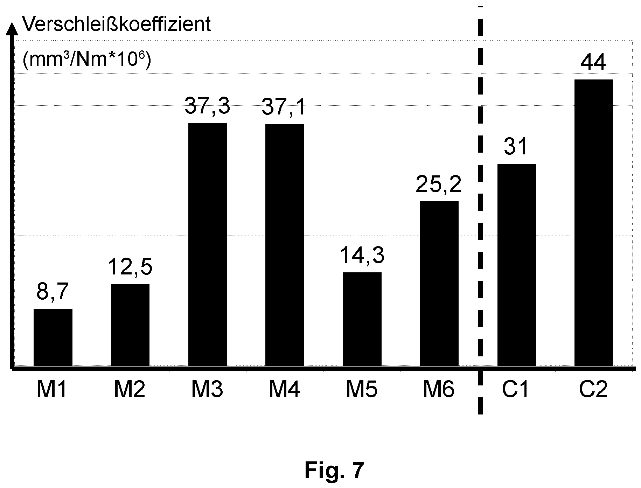

**Fig. 7** stellt die Verschleißkoeffizienten gemäß Tabelle 1 als Säulendiagramm dar. Niedrigere Werte sind besser.

Demnach weisen die beiden Materialien M1, M2 im Vergleich zu den Vergleichsmaterialien C1, C2, insbesondere um Faktoren von 3 bzw. 4 und höher, reduzierte Verschleißkoeffizienten auf.

Weiter zeichnet sich insbesondere das Material M1 durch eine hohe Vickers-Härte HV50 auf. Diese bewegt sich dennoch in einem Bereich von weniger als 1500 HV50, sodass ganz besonders das Material M1, aber auch das Material M2, im Bohrkopf 18 verwendbar sind.

Auch die Materialien M5 und M6 weisen sich durch einen gegenüber den Vergleichsmaterialien C1, C2 erheblich reduzierten Verschleiß aus. Auch weisen sie hohe, aber dennoch für die Anwendung bei Bohrköpfen geeignete, Härten auf.

Die Verschleiß der Materialien M3 und M4 ist zumindest geringer als bei reinem Nickel, entsprechend Vergleichsmaterial C2, als Binder. Dabei weisen sie zudem gute Zähigkeitswerte auf.

Aufgrund ihrer besonders günstigen Verschleißfestigkeiten können die Materialien M1, M2, M3, M4, M5, M6 insbesondere in den Schneidenschultern 26 (siehe Fig. 2) enthalten sein. Innerhalb dieser Gruppe sind insbesondere die Materialien M1 und M2 für diesen Anwendungszweck besonders geeignet.

### Bezugszeichenliste

- 10: Hammerbohrer
- 12: Schaftabschnitt
- 14: Förderwendel
- 16: Einsteckende
- 18: Bohrkopf
- 20: Schneide
- 22: Schlagspitze
- 24: Schlagkante
- 26: Schneidenschulter
- 28: Umfangsfläche
- C1: Vergleichsmaterial
- C2: Vergleichsmaterial
- L: Längsachse
- M1: Material
- M2: Material
- M3: Material
- M4: Material
- M5: Material
- M6: Material

## Patentansprüche

**1. Hammerbohrer (10),** beispielsweise zum Bohren von Gestein wie beispielsweise Beton, umfassend ein Einsteckende (16), einen Schaftabschnitt (12) und einen Bohrkopf (18), wobei der Bohrkopf (18) ein Material (M1, M2) aus einem Härtevermittler und einem Binder aufweist,
**dadurch gekennzeichnet,**
**dass** der Anteil des Binders am Material (M1, M2) wenigstens 5 Gew.-% und höchstens 13 Gew.-% beträgt, wobei
- der Binder Ni und Fe aufweist, wobei
- der Binder wenigstens 10 Gew.-% und höchstens 30 Gew.-% Fe und wenigstens 70 Gew.-% Ni enthält.

**2.** Hammerbohrer (10) nach dem vorhergehenden Anspruch, **dadurch gekennzeichnet, dass** der Härtevermittler ein Wolframkarbid und / oder ein Wolframborid umfasst.

**3.** Hammerbohrer (10) nach einem der vorhergehenden Ansprüche, **dadurch gekennzeichnet, dass** Ni und Fe insgesamt wenigstens 85 Gew.-%, insbesondere wenigstens 94%, des Binders bilden.

**3.** Hammerbohrer (10) nach einem der vorhergehenden Ansprüche, **dadurch gekennzeichnet, dass** der Binder wenigstens ein Element aus der Gruppe, umfassend Ti, V, Cr, Mn, Zr, Nb, Mo, Hf, Ta, W, Re, Ru, Al, Cu, B, N und C, aufweist.

**4.** Hammerbohrer (10) nach einem der vorhergehenden Ansprüche, **dadurch gekennzeichnet, dass** das Material (M1, M2) eine Vickershärte von wenigstens 1250 HV30 und höchstens 1500 HV30 aufweist.

**5.** Hammerbohrer (10) nach einem der vorhergehenden Ansprüche, **dadurch gekennzeichnet, dass** das Material (M1, M2) eine Zähigkeit von wenigstens 9 MPa*m^{1/2}, insbesondere von wenigstens 11 MPa*m^{1/2}, aufweist.

**6.** Hammerbohrer (10) nach einem der vorhergehenden Ansprüche, **dadurch gekennzeichnet, dass** der Bohrkopf (18) wenigstens eine Schneide (20) aufweist, die wenigstens eine Schlagkante (24) und / oder eine Schlagspitze (22) sowie wenigstens eine Schneidenschulter (26) aufweist, wobei die Schneidenschulter (26) das Material (M1, M2) aufweist.

**7.** Hammerbohrer (10) nach einem der vorhergehenden Ansprüche, **dadurch gekennzeichnet, dass** das Material (M1, M2) Aluminium mit bis zu 10 Gew.-% aufweist.

**8.** Hammerbohrer (10) nach einem der vorhergehenden Ansprüche, **dadurch gekennzeichnet, dass** der Binder zwischen 5 und 11 Gew.-%, insbesondere 9 Gew.-%, des Materials umfasst, wobei Fe einen Anteil von wenigstens 23 Gew.-% und höchstens 27 Gew.-% des Binders ausmacht und wobei Fe und Ni insgesamt einen Anteil von wenigstens 98 Gew.-% des Binders ausmachen.

**9.** Hammerbohrer (10) nach einem der vorhergehenden Ansprüche, **dadurch gekennzeichnet, dass** der Binder Stickstoff umfasst.

**10.** Hammerbohrer (10) nach einem der vorhergehenden Ansprüche, **dadurch gekennzeichnet, dass** der Hammerbohrer (10) wenigstens drei, insbesondere wenigstens fünf, Schneiden (20) aufweist.
